# EUROPEAN PATENT SPECIFICATION

(11) **EP 0 864 851 B1**
(45) Date of publication and mention of the grant of the patent: **17.09.2003**
(21) Application number: 97850040.3
(22) Date of filing: 11.03.1997
(51) Int. Cl.: G01F 1/80

(54) **Material distribution arrangement in a mass flow meter**
Materialverteilungsanordnung in einem Massendurchflussmesser
Arrangement de distribution du matériel dans un débitmètre massique

(43) Date of publication of application: 16.09.1998
(73) Proprietor: S.E.G. MEKANIK AB, S-662 00 Amal (SE)
(72) Inventor: Söderholm, Arne, 167 67 Bromma (SE); Söderholm, Olle, 161 55 Bromma (SE)
(74) Representative: Karlström, Lennart

(56) References cited:
- EP-A- 0 146 902
- GB-A- 731 213

## Description

The present invention relates to an apparatus for measuring a mass flow, in particular bulk material or a fluid, and the invention especially relates to a material distribution arrangement used in a measuring device in which the mass flow rate is measured by using the Coriolis measuring principle.

Such a prior measuring device is described in our copending European, patent application No. 96850202.1, filed on 29 November 1996 and not made available to the public before the filing date of the present application, describing the main principles for such a mass flow meter, and to which application herewith is referred.

In such a measuring device the particles to be measured are subjected to tangential acceleration in a whirling impeller, and the torque exerted on the vanes of the impeller in reaction to the Coriolis force of accelerated particles is being measured as an indication of the mass flow rate. The object of our above European patent application was to avoid measurement errors, due to uneven distribution of the material to be measured.

From GB 731 213 A a measuring apparatus of the above kind is known. The material flow is directed to the center of an impeller wheel with a number of radially directed vanes. The particles of the material accelerate along the vanes and the Coriolis force appearing produces a torque, which is measured by a mechanical instrument of pneumatic type. At the center of the impeller there is a conical projection, which is stated to guide the material into the radial direction and prevent some material of flour type to stick to the center part.

Even though the accuracy in the measurements has been greatly improved by our previous device, it is still subject to some errors if the distribution of the material can not be guaranteed. The errors depend on that the Coriolis force is reduced when the material adheres to the bottom of the impeller, and the rotation of the impeller is slowed down thus affecting the resulting measurement test result.

The object of the present invention is therefore to further improve the distribution of material introduced into the impeller.

The above object has been obtained in that the invention has been given the features stated in the independent claim 1. Preferred embodiments of the invention are defined in the dependent claims.

According to the invention, the flow of material towards the impeller is introduced into a central reception area of the impeller, wherein a distribution device is connected to the inlet tube and is arranged to transfer the material from the inlet tube into the impeller vanes with low friction.

The invention will now be described in the form of a non-limiting embodiment, shown in the enclosed drawings, in which **Fig. 1** shows a schematic perspective view of an impeller having a central reception area according to the invention, **Fig. 2** shows schematically a perspective view of a distribution device of the impeller according to the invention, and **Fig. 3** shows schematically a perspective view of another distribution device of the impeller according to the invention.

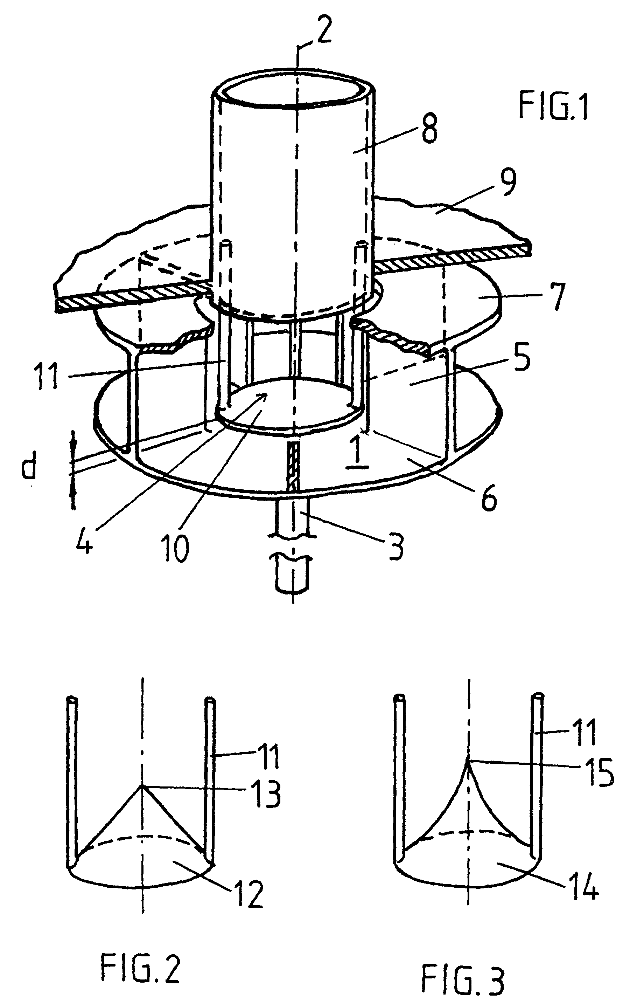

The impeller 1 shown in Fig. 1 is intended to be a part of a complete device for measuring a mass flow of the kind described in our copending European patent application No. 96850202.1. The other parts relating to the measuring device can have the same, but also alternative, designs as those shown in our previous application. The impeller 1 is mounted for rotation around a vertical axis of rotation 2, mounted on a vertical shaft 3. The impeller is provided with a central reception area 4 and radially outside the central reception area radially directed vanes 5 are leading to the circumferential edge of the impeller 1. The impeller has a bottom plate 6, and an upper plate 7, wherein the vanes 5 are connecting the lower and upper plates 6, 7 outside the central reception area 4. The material to be measured is fed into the impeller 1 by an inlet tube arrangement 8, and is deposited in the central reception area 4. The inlet tube 8 passes a cover plate 9, covering the impeller 1, and ends on a level with a free central opening in the upper plate 7, thus allowing the material to come into the central reception area 4 of the impeller 1. The inlet tube 8 is provided with a distribution plate 10, connected to the inlet tube 8 by means of connection rods 11. The distribution plate 10 is located at only a short distance d above the lower plate 6 of the impeller 1, so that the impeller 1 can rotate freely without contacting the distribution plate 10. The surface of the distribution plate 10 can also be coated by a low-friction material, e.g polytetrafluoroethylene (TEFLON®)

In Fig. 2 is shown an alternative distribution device 12, intended to be used instead of the distribution plate 10, shown in Fig. 1. The distribution device 12, thus, is connected to the inlet tube 8 by means of the connection rods 11. Instead of a plate the distribution device 12 has a conical surface with the top 13 pointing towards the inlet tube 8, thereby deflecting material coming from the inlet tube towards the impeller vanes 5, and the material can thereby normally not be stacked on the distribution device.

The embodiment shown in Fig. 3 shows a distribution device 14 which differs from the one shown in Fig. 2 in that the conical surface is concavely curved and has also its top 15 pointing towards the inlet tube 8, thereby deflecting material coming from the inlet tube towards the impeller vanes 5, and the material can thereby normally not be stacked on the distribution device.

The inlet tube can be provided with internal means for obtaining a rotation of the material fed through the inlet tube, or the part of the inlet tube closest to the central reception area can be made to rotate in the opposite direction to the direction of rotation of the impeller. Both these arrangements for the inlet tube are fully described in our copending European patent application, filed simultaneously herewith.

## Claims

1. A material distribution arrangement for use in a mass flow measuring device using the Coriolis measuring principle, wherein fluent material through an inlet tube (8) is fed to a central reception area (4) of a rotating impeller (1), rotating around a Vertical axis (2), and wherein vanes (5) are arranged to transport the material from the central reception area (4) to the circumferential edge of the impeller (1) on a bottom plate (6) of the impeller, said arrangement including a distribution device arranged in said central reception area (4) to transfer the material from the inlet tube (8) into the vanes (5) with low friction **characterised in that** said distribution device (10; 12; 14) is connected to the inlet tube.

2. A material distribution arrangement according to claim 1, **characterised in that** the bottom of the distribution device (10; 12; 14) is located at a distance (d) above the bottom plate (6) of the rotating impeller (1) .

3. A material distribution arrangement according to claim 2, **characterised in that** the distribution device (10; 12; 14) is connected to the inlet tube (8) by means of connection rods (11).

4. A material distribution arrangement according to claim 2 or 3, **characterised in that** the distribution device is a distribution plate (10).

5. A material distribution arrangement according to claim 2 or 3, **characterised in that** the distribution device is a conical surface (12; 14), having its bottom close to the bottom plate (6) of the impeller (1) and its top (13; 15) pointing towards the inlet tube (8).

6. A material distribution arrangement according to claim 5, **characterised in that** the conical surface (14) is concavely curved.

7. A material distribution arrangement according to any of the claims 2-6, **characterised in that** the distribution device (10; 12; 14) has a surface coating of a low friction material.

## Patentansprüche

1. Materialverteilungsanordnung zum Einsatz in einer Massendurchflussmessvorrichtung unter Benutzung des Coriolis Messprinzips, bei der fließendes Material durch ein Einlassrohr (8) einem zentralen Aufnahmebereich (4) eines rotierenden Messrads (1) zugeführt wird, welches um eine vertikale Achse (2) rotiert, und bei dem Schaufeln (5) angeordnet sind, um das Material auf einer unteren Platte (6) des Messrads von dem zentralen Aufnahmebereich (4) zu der Umfangskante des Messrads (1) zu befördern, wobei die Anordnung eine in dem zentralen Aufnahmebereich (4) angeordnete Verteilungsvorrichtung aufweist, um das Material mit geringer Reibung von dem Einlassrohr (8) in die Schaufeln (5) zu befördern, **dadurch gekennzeichnet,**
**dass** die Verteilungsvorrichtung (10; 12; 14) mit dem Einlassrohr verbunden ist.

2. Materialverteilungsanordnung nach Anspruch 1, **dadurch gekennzeichnet, dass** der unterste Teil der Verteilungsvorrichtung (10; 12; 14) in einem Abstand (d) über der unteren Platte (6) des rotierenden Messrads (1) angeordnet ist.

3. Materialverteilungsanordnung nach Anspruch 2, **dadurch gekennzeichnet, dass** die Verteilungsvorrichtung (10; 12; 14) mittels Verbindungsstäben (11) mit dem Einlassrohr (8) verbunden ist.

4. Materialverteilungsanordnung nach Anspruch 2 oder 3, **dadurch gekennzeichnet, dass** die Verteilungsvorrichtung eine Verteilungsplatte (10) ist.

5. Materialverteilungsanordnung nach Anspruch 2 oder 3, **dadurch gekennzeichnet, dass** die Verteilungsvorrichtung eine kegelförmige Fläche (12; 14) ist, die ihren untersten Teil nahe der unteren Platte (6) des Messrads (1) hat und deren Spitze (13; 15) zu dem Einlassrohr (8) hin zeigt.

6. Materialverteilungsanordnung nach Anspruch 5, **dadurch gekennzeichnet, dass** die kegelförmige Fläche (14) konkav gekrümmt ist.

7. Materialverteilungsanordnung nach einem der Ansprüche 2 bis 6, **dadurch gekennzeichnet, dass** die Verteilungsvorrichtung (10; 12; 14) eine Oberflächenbeschichtung aus einem Material mit niedriger Reibung aufweist.

## Revendications

1. Arrangement de distribution de matière à utiliser dans un dispositif de mesure de débit massique en appliquant le principe de mesure de Coriolis, dans lequel la matière fluide qui s'écoule à travers un tube d'entrée (8) est amenée vers une zone de réception centrale (4) d'une roue motrice (1) tournant autour d'un axe vertical (2), et dans lequel des pales (5) sont arrangées pour transporter la matière depuis la zone de réception centrale (4) jusqu'au bord circonférentiel de la roue motrice (1) sur une plaque inférieure (6) de celle-ci, ledit arrangement comprenant un dispositif de distribution disposé dans la zone de réception centrale (4) pour transférer la matière depuis le tube d'entrée (8) vers les pales (5) avec une friction réduite,
**caractérisé en ce que**
le dispositif de distribution (10; 12; 14) est relié au tube d'entrée.

2. Arrangement de distribution de matière suivant la revendication 1,
**caractérisé en ce que**
le fond du dispositif de distribution (10; 12; 14) est situé à une distance (d) au-dessus de la plaque inférieure (6) de la roue motrice (1).

3. Arrangement de distribution de matière suivant la revendication 2,
**caractérisé en ce que**
le dispositif de distribution (10; 12; 14) est relié au tube d'entrée (8) au moyen de tiges de connexion (11).

4. Arrangement de distribution de matière suivant la revendication 2 ou 3,
**caractérisé en ce que**
le dispositif de distribution est une plaque de distribution (10).

5. Arrangement de distribution de matière suivant la revendication 2 ou 3,
**caractérisé en ce que**
le dispositif de distribution est une surface conique (12; 14) dont le pied est proche de la plaque inférieure (6) de la roue motrice (1) et dont le sommet (13; 15) pointe en direction du tube d'entrée (8).

6. Arrangement de distribution de matière suivant la revendication 5,
**caractérisé en ce que**
la surface conique (14) est incurvée de façon concave.

7. Arrangement de distribution de matière suivant l'une quelconque des revendications 2 à 6,
**caractérisé en ce que**
le dispositif de distribution (10; 12; 14) présente un revêtement de sur face constitué d'une matière à friction réduite,
